# EUROPEAN PATENT SPECIFICATION

(11) **EP 1 095 563 B1**
(45) Date of publication and mention of the grant of the patent: **13.08.2003**
(21) Application number: 00830704.3
(22) Date of filing: 25.10.2000
(51) Int. Cl.: A01N 3/02

(54) **Method to lengthen the shelf-life of cut flowers**
Verfahren zur Verlängerung der Haltbarkeit von Schnittblumen
Méthode pour prolonger la durée de conservation de fleurs coupées

(30) Priority: 25.10.1999 IT SA990018
(43) Date of publication of application: 02.05.2001
(73) Proprietor: Universita' Degli Studi di Salerno, 84084 Fisciano (SA) (IT)
(72) Inventor: Di Matteo, Marisa, 80055 Portici NA (IT); Donsi', Giorgio, 80125 Napoli (IT); Crescitelli, Alessio, 80055 Portici NA (IT)
(74) Representative: Bazzichelli, Alfredo

(56) References cited:
- WO-A-99/38522
- CH-A- 688 787
- DE-A- 4 221 103

## Description

The present invention relates to a method to lengthen the shelf-life (hereinafter also indicated as post-harvest life) of cut flowers with a hydroalcoholic solution of myrrh.

In these last years the world of floriculture has known a prolonged development phase not followed, unfortunately, by a corresponding development of the Italian floriculture. Even if the last has a very primary role as far as the innovation aspects of the product (for example in case of carnations) and quality of sold products are concerned, the difficulties in efficient and widespread distribution come up with by a production strongly delocalized on territory caused productions of other countries to be preferred, faster in providing efficient transportation to reach the sale markets. Therefore, since our floriculture cannot rely on rapid transportation and since it necessarily has to provide far away foreign markets, difficult to reach, it had to develop alternative solutions, for example by developing lengthened post-harvest life products.

The problem of transportation in optimum conditions and for relatively long periods of cut flowers, substantially still living organisms, is a problem felt for a long time which has. found several solutions, most of them addressed to the lengthening of the life of cut flower in water, that is in the step of the real utilization thereof. New varieties with particular resistance features, treatments acting on the transportation temperature and with substances able to limit the effect of degrading microorganisms, treatments with inhibitors of ethylene oxide playing a determining role in the flower senescence have been the up to now proposed alternatives.

On the contrary, the inventors of the present invention have surprisingly found out that a treatment with myrrh hydroalcoholic solutions, followed by the drying of the flower, makes it possible a lengthening of post-harvest life of the flowers themselves and, at the same time, obtains the further advantage of making the transportation thereof actually easier. The foregoing seems evident if only the greater easiness in transporting a substantially dry product (hereinafter designated with "dry" preserved product) compared to a product immersed in water is considered.

W099/38522 relates the use of a pharmaceutical composition which comprises myrrh and rhatany in the prevention and treatment of viral infections in human and non-human animals. A particular use is for the treatment of common cold in human beings.

DE4221103 discloses oral compositions containing plant extracts, among which also a myrrh extract is mentioned, for the treatment of tooth decay and paradontal diseases;

CH 688 787 relates to a composition of natural ether oil and essences to be generally used in men, animals and plants and in the environment.

It is an object of the present invention a method to lengthen the post-harvest life of cut flowers comprising the following steps:
a) plunging the stems of cut flowers into a hydroalcoholic solution containing 10-95% of a linear or ramified aliphatic alcohol with 2-5 carbon atoms, and 0,01-35% myrrh for a period of time between 10 seconds and 2 hours and
b) drying the flower stems by exposure to outer environment.

The myrrh (utilized in the scope of the present invention) is constituted by a mixture of components, among which gums and mucilages, terpenic substances, dipentene, limonene, delta-epinene, eugenol, cadinene, m-creosol, cinnamic aldehyde, myrrholic acid, formic acid, acetic acid, cuminic aldehyde, α, β, and γ commiphoric acids may be mentioned.

The drying step is performed at a temperature between 2 and 35°C, preferably between 7 and 25°C.

It is to be underlined that, following treatment according to the present invention, the flowers are transported in dry status with the easily evidentiable advantages.

A crucial aspect of the method according to the present invention, which is applicable to flowers cut no more than 10 days earlier, is the treatment with a myrrh hydroalcoholic solution.

As aliphatic alcohol according to the present invention is preferably utilized ethyl alcohol or ethyl alcohol denaturated (90%).

Within the scope of the present invention myrrh or the compounds thereof as above illustrated have been utilized, which in past centuries was utilized as bactericide and analgesic; the composition of myrrh provides for the presence of substances such as terpenes, eugenol, cinnamic aldehyde, mineral salts; resines, gums and mucilages. The utilization of myrrh solutions has influenced the physiology of cut flowers, not as antimicrobial, but as retarder in the senescence process, by influencing both product breathing (CO₂ production, ethylene and other gaseous metabolites), and the water loss from tissues. The slowing down of the senescence process during preservation, transportation and commercialization of the "dry" product has been obtained with the hydroalcoholic solutions used in the present invention containing 0,01% to 35% myrrh and 10 to 95% alcohol. The flowers are plunged for about 3 cm of stem in the hydroalcoholic solution used in the present invention for periods ranging from 10 seconds to two hours. The plunging time is function of the myrrh quantity contained in the hydroalcoholic solution. Lower quantities will require longer contact times, higher quantities of myrrh will require shorter times. Generally, a preferred contact concentration/time ratio is such that for a 10-minute-long plunging into a solution with a myrrh concentration by approx. 20% with a flower absorption of about 0,005 g of myrrh is obtained.

The myrrh solution used in the present invention is directly utilized, soon after preparation, for the treatment of flower stems (according to plunging modes as previously defined); alternatively, the solution may be prepared with higher concentrations and then diluted in water in different ratios according to the operator's requirements. Up to a diluition ratio of 1:35 the efficiency of the solution, which has maintained the efficiency during time, has been ascertained. The hydroalcoholic solution with 95% alcohol and with 35% myrrh keeps the efficiency thereof as starting from thirty six months.

"Dry" preservation tests by utilizing the treatment based upon myrrh hydroalcoholic solutions have been performed on cut flowers belonging to cultivar of different species, by utilizing flowers both with wooden and herbaceous. The main treated species have been: roses, gerberas, lilium, tulips, carnations and peach flowers. Tests on bouquet containing different types of flowers have been also performed. However, a principle limit for the utilization of the method according to the invention for other species of cut flowers different from the mentioned ones does not exist.

### Example 1

### Post-harvest life preservation of gerberas

Among the flowers of difficult preservation, which have currently reached an important market share, the gerbera is to be mentioned. This flower, already few days after harvesting, withers and consequently diminishes the commercial value thereof. The flower deterioration causes after harvesting are different, but in case of "dry" preservation, that is without plunging the stems in water, it may be believed that the main problem is represented by the water loss for breathing and transpiration, with the consequent loss in turgescence of the stem conducting tissue.

The first discomfort sign of gerberas after harvesting, is represented by the stem fold, few centimetres far from the flower head with consequent nutrition difficulty of corolla and therefore flower withering.

The preservation tests for these flower species have been centred, therefore, in the stem structure variations during the preservation period.

The changes occurring in the stem structure have been evaluated by an analysis of the mechanical properties of resistance to bending, and also microscope analyses on the stem portion subjected to treatment with the myrrh solution according to the present invention have been performed.

Tests have been performed on gerberas (Gerbera jamesonii) of one only cultivar, in the same maturation stage and cultivated in Campania.

For preservation, less drastic temperature conditions (7°) instead of the usually utilized ones for gerberas (2°) have been chosen and evaluations have been performed up to 8 days after treatment.

Two sample series have been prepared, both packed in the traditional carton packings:
- the first series was constituted by gerberas without any treatment;
- the second series was constituted by gerberas the stems thereof had been plunged for 10 seconds in a myrrh hydroalcoholic solution (ethyl alcohol denaturated by 90% and myrrh by 0,2%).

The rheologic analyses have been performed on the stem part immediately underneath the corolla. A measure cell constituted by two plexiglas wedges far away 7 cm was utilized, whereon the stem was leant and then measured the vertical flexural strength F opposed by the sample in the central part thereof. This strength was measured by stem deflections *f* extended up to 25 mm. The load head was cylinder-shaped with a 10-mm diametre and was made to advance with a 0.5 mm/s speed. The rheologic analyses performed by means of a Texture Expert TAXT2 texturometer, evidenced smaller variations in structural behaviour for the stems of gerberas treated with the solution according to the method of the present invention.

The load-deformation data were shown as loading curves; the value of the ratio *F*/*f*, representative of the global deformation, was obtainable from the maximum and relative strength value. This, in turn, enabled to calculate the apparent rigidity module *E* (Young module) of the test material

| Variations of rigidity module versus time | | |
|---|---|---|
| E (Kgp/cm^2) | | |
| DAYS | Not treated samples | Treated samples |
| 0 | 450 | 450 |
| 2 | 220 | 400 |
| 4 | 120 | 370 |
| 6 | 100 | 350 |
| 8 | 70 | 320 |

The data shown in the table show an optimum preservation for the samples treated according to the method of the invention even after eight days in dry condition, whereas the not treated samples show a net decay in rigidity already as from the second day.

### Example 2

### Post-harvest life preservation of roses

Several preservation tests of rose cultivar have been performed.

For the experiments, four groups of roses belonging to the same cultivar, just cut and similar for colour and maturation, have been prepared. Two of these groups have been treated by plunging the rose stems for about three cm in an aqueous solution containing 10% ethyl alcohol denaturated and 0,02% myrrh. For the preservation, one group of treated roses and one group of not-treated roses have been placed at a temperature of 7°C. The remaining groups, one treated and the other one not treated, have been maintained at a temperature of 25°C. After six days of "dry" preservation, all the roses have been placed in water. During preservation, analyses have been performed, to determine the quality of the so-treated flowers. To highlight the behaviour difference between the treated and the not-treated roses the outcomes of an expert panel test performed by 9 rose growers and field operators are shown hereinafter.

| Sensorial analysis of rose samples | | | | | |
|---|---|---|---|---|---|
| Texas variety roses | | | | | |
| Time in days | Samples | Temperature | B ud opening | General Turgor | Leaves' aspect |
| 0 | treat. | 7°C | 1 | 1 | 1 |
| | not treat. | 7°C | 1 | 1 | 1 |
| | treat. | 25°C | 1 | 1 | 1 |
| | not treat. | 7°C | 1 | 1 | 1 |
| | | | | | |
| 2 | treat. | 7°C | 1,5 | 1,5 | 1 |
| | not treat. | 7°C | 2,5 | 2,5 | 2,5 |
| | treat. | 25°C | 1,6 | 1,5 | 1,5 |
| | not treat. | 25°C | 3 | 3 | 3 |
| 4 | treat. | 7°C | 1,5 | 1,5 | 1,5 |
| | not treat. | 7°C | 2,5 | 2,5 | 2,5 |
| | treat. | 25°C | 1 | 1 | 2 |
| | not treat. | 25°C | 3 | 3 | 3 |
| | | | | | |
| 6 | Treat. | 7°C | 1,5 | 1,5 | 1,5 |
| | not treat. | 7°C | 3 | 3 | 3 |
| | Treat. | 25°C | 2 | 2 | 2 |
| | not treat. | 25°C | | | |

| **All flowers are put in water** | | | | | |
|---|---|---|---|---|---|
| 10 | Treat. | 7°C | 1 | 1 | 1 |
| | | | | | |
| | Not treat. | 7°C | 2 | 2 | 2 |
| | Treat. | 25°C | 1 | 1 | 1 |
| | not treat. | 25°C | 3 | 3 | 3 |
| | | | | | |
| 15 | Treat. | 7°C | 1 | 3 | 3 |
| | Not treat. | 7°C | 5 | 5 | 4 |
| | Treat. | 25°C | 3 | 3 | 3 |
| | not treat. | 25°C | 5 | 5 | 4 |

From the table it may be noted that the treated samples have maintained the initial quality for longer times even under stressing conditions. The treated roses, after having been put in water, behave similarly as the just cut roses.

## Claims

1. A method to lengthen the post-harvest life of cut flowers comprising the following procedures:
a) plunging the stems of cut flowers into a solution comprising 10-95% of a linear or ramified aliphatic alcohol with 2-5 carbon atoms, and 0,01-35% of myrrh for a period of time between 10 seconds and 2 hours;
b) drying the flower stems by exposure to outer environment, so that the flowers are transported in a dry status.

2. The method according to claim 1, wherein said aliphatic alcohol is ethyl alcohol.

3. The method according claim 2, wherein said ethyl alcohol is ethyl alcohol denaturated.

4. A method according to at least one of the preceding claims, wherein said exposure to outer environment is performed at a temperature between 2 and 35° C, preferably between 7 and 25° C.

5. Cut flowers treated according to the method of claims 1 to 4.

6. Use of hydroalcoholic solutions of myrrh to lengthen the post-harvest life of cut flowers.

## Patentansprüche

1. Verfahren zum Verlängern der Lebensdauer von Schnittblumen nach der Ernte, umfassend die folgenden Arbeitsgänge:
a) Eintauchen der Stängel von Schnittblumen in eine Lösung, die 10-95 % eines linearen oder verzweigten aliphatischen Alkohols mit 2-5 Kohlenstoffatomen und 0,01-35 % Myrrhe umfasst, während eines Zeitraums zwischen 10 Sekunden und 2 Stunden;
b) Trocknen der Blumenstängel durch Aussetzen bzw. Einwirkenlassen der äuβeren Umgebung, so dass die Blumen in einem trockenen Zustand transportiert werden.

2. Verfahren nach Anspruch 1, wobei der aliphatische Alkohol Ethylalkohol ist.

3. Verfahren nach Anspruch 2, wobei der Ethylalkohol denaturierter Ethylalkohol ist.

4. Verfahren nach wenigstens einem der vorangehenden Ansprüche, wobei das Aussetzen bzw. Einwirkenlassen der äußeren Umgebung bei einer Temperatur zwischen 2 und 35°C, vorzugsweise zwischen 7 und 25°C erfolgt.

5. Schnittblumen, die gemäß dem Verfahren nach den Ansprüchen 1 bis 4 behandelt sind.

6. Verwendung von alkoholisch-wässrigen Lösungen von Myrrhe zum Verlängern der Lebensdauer von Schnittblumen nach der Ernte.

## Revendications

1. Procédé pour prolonger la durée de conservation de fleurs coupées, comprenant les opérations suivantes :
a) plonger les tiges des fleurs coupées dans une solution comprenant 10-95% d'un alcool aliphatique linéaire ou ramifié ayant 2-5 atomes de carbone, et 0,01-35% de myrrhe pendant une durée entre 10 secondes et 2 heures;
b) sécher les tiges des fleurs en les exposant à l'environnement extérieur, de façon que les fleurs soient transportées à l'état sec.

2. Procédé selon la revendication 1, dans lequel ledit alcool aliphatique est l'alcool éthylique.

3. Procédé selon la revendication 2, dans lequel ledit alcool éthylique est l'alcool éthylique dénaturé.

4. Procédé selon au moins l'une des revendications précédentes, dans lequel ladite exposition à l'environnement extérieur s'effectue à une température entre 2 et 35 °C, de préférence entre 7 et 25 °C.

5. Fleurs coupées traitées selon le procédé des revendications 1 à 4.

6. Utilisation de solutions hydroalcooliques de myrrhe pour prolonger la durée de conservation des fleurs coupées.
